**Europäisches Patentamt**

(19) **European Patent Office**

**Office européen des brevets**

(11) Publication number: **0 228 793**
**B1**

(12) # EUROPEAN PATENT SPECIFICATION

(45) Date of publication of the patent specification:
13.12.89

(51) Int. Cl.⁴: **B29D 30/54**

(21) Application number: **86308885.2**

(22) Date of filing: **14.11.86**

(54) Retreading process.

(30) Priority: **15.11.85 JP 256899/85**

(43) Date of publication of application:
**15.07.87 Bulletin 87/29**

(45) Publication of the grant of the patent:
**13.12.89 Bulletin 89/50**

(84) Designated Contracting States:
**DE FR GB**

(56) References cited:
**US-A- 3 779 833**
**US-A- 3 802 978**
**US-A- 4 175 991**
**US-A- 4 328 053**

(73) Proprietor: **SUMITOMO RUBBER INDUSTRIES, CO. LTD,**
**No. 1-1, Tsutsui-cho 1-chome, Chuo-ku Kobe-shi**
**Hyogo-ken 651(JP)**

(72) Inventor: **Noda, Toshiyuki, 3-25 Higaski**
**Shiriikecho 6-chome Nagata-ku, Kobe-shi**
**Hyogo-ken(JP)**

(74) Representative: **Stewart, Charles Geoffrey, SP TYRES**
**UK LIMITED Tyre Technical Division, Fort Dunlop**
**Erdington Birmingham B24 9QT(GB)**

ACTORUM AG

## Description

This invention relates to a retreading process for a radial tyre for heavy duty vehicles such as truck, bus and the like.

In general such radial tyres comprise a breaker made of three or four plies of steel cords laid at a relatively small angle with respect to the circumferential direction of the tyre. In retreading such a type of tyre when the breaker is damaged by cutting, excessive wear or separation at the breaker ends a new breaker layer is substituted for the damaged part. This is known as rebreakering.

Rebreakering has been is use in Europe for many years and in Japan,it has been popular for the last seven or eight years, particularly in subsidiaries of tyre manufactures due to their advantageous situations in having access to rebreakering technology and the availability to them of materials for rebreakering.

There are two processes used. One is the remould-procedure where the tyre carcass is provided with a new unvulcanized tread rubber, and then they are revulcanized and the other is the pre-cure tread procedure, where the base tyre is provided with a new ready vulcanized tread rubber.

The pre-cure tread procedure, however, has some disadvantages because the hoop effect of the breaker is decreased when the damaged ply is removed from the worn tyres thus when the tyre is inflated to the high inner air pressure of 7 to 8 kg/cm for the vulcanisation process with a new breaker ply applied after the removal of the damaged breaker ply and following vulcanisation the tyre is removed from the mould, there is a cave-in action of the breaker following the above mentioned high inner air pressure and as a result, the radius of tread curvature is decreased.

The result of a small radius of tread curvature is to generate defects such as early wear and tear at the tread centre portion or cracks at the groove bases due to excessive movement of tread rubber in use of the tyre.

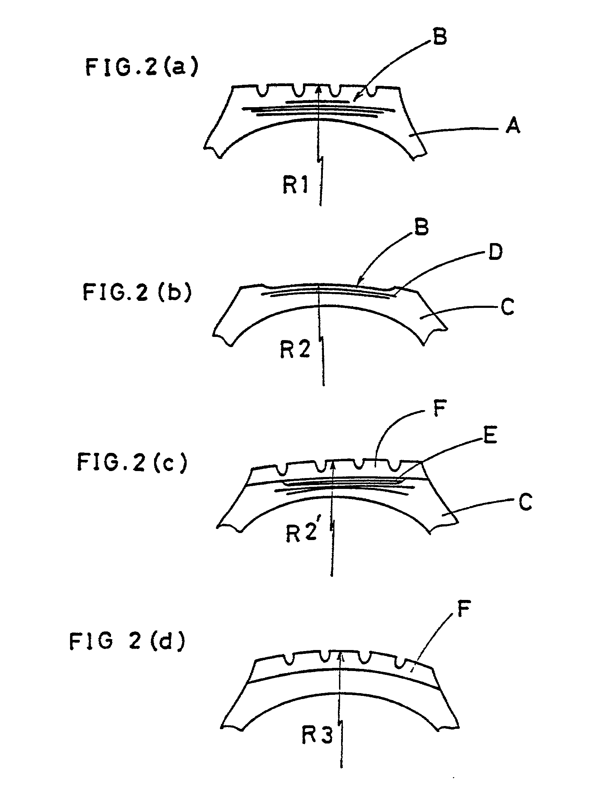

These affects are shown in more detail in Fig 2 beginning with Fig 2a) which shows a part sectional view of a new tyre for which the radius of tread curvature R1 normally measures 450 to 500mm. Fig 2(b) shows a part sectional view of a worn tyre C with the damaged upper ply of the breaker B removed and then the radius R2 of tread curvature is smaller due to the decrease in the hoop effect of the breaker B. For the tyre of the example the radius R2 normally then measures about 300mm. Note that in this case, the radially inner two plies D of the breaker B of four piles are not damaged, and so the new breaker plies E to be applied are only two plies. Fig 2(c) shows a part sectional view of the tyre with its new breaker plies E and pre vulcanized tread rubber F. The new breaker plies E do not add to the hoop reinforcement because the breaker ply E is only applied and not vulcanized, and so the radius R2′ of the tread curvature is the same as the radius in Fig 2(b). Fig 2 (d) shows in a part section the completed vulcanized tyre and then radius R3 of the tread curvature is substantially smaller following the influence of the high air pressure used in the vulcanizing process.

The pre-cure procedure, notwithstanding the above-mentioned drawbacks however, show advantage in the retreaded tyre such as higher wear resistance and so the popularity among users is high. It also makes it possible to renew a worn tyre at a lower cost regardless of the base tyre size. For this reason, this procedure is widespread in U.S.A. and as a recent trend, the pre-cure procedure becomes increasingly popular also in Europe since the re-mould process makes it difficult and expensive to cater for the recent increase in the number of tyre sizes.

It is an object of the present invention to provide a retreading process which makes it possible to suppress decrease in the tread radius, the drawbacks in the prior pre-cure procedure, and to maintain a high resistance to tread wear and low production cost, the advantages of the pre-cure procedure.

According to one aspect of the present invention a retreading process comprises the steps of applying a new breaker ply to a tyre carcass for which a damaged breaker ply has been removed, applying over the breaker ply 13 on the vulcanised cushion layer 2 and a vulcanized or semi vulcanized tread rubber 3 and the assembly to vulvanize the assembly characterised by vulcanising and pressing with a protective ring 14, having at least one reinforcement ply therein whose cords are embedded in rubber and lie at an angle of not more than 15 to the circumferential dircetion of the tyre, positioned inside the tyre carcass 1 adjacent to the breaker to restrain elongation of the breaker in the circumferential direction due to the pressure.

Further aspects of the invention will be apparent from the following description by way of example only, of an embodiment in conjunction with the attached diagramatic drawings.

Fig 1(a) is a part section view of a tyre showing the present invention;

Fig 1(b) is a diagram showing the vulcanization process of the present invention;

Fig 1(c) is a schematic perspective view showing the protective ring

Figs 2(a),(b),(c) and (d) are partial sectional views showing priort art; and

Fig 3 is a graph showing the relationship between the radius of tread curvatures and inner air pressure.

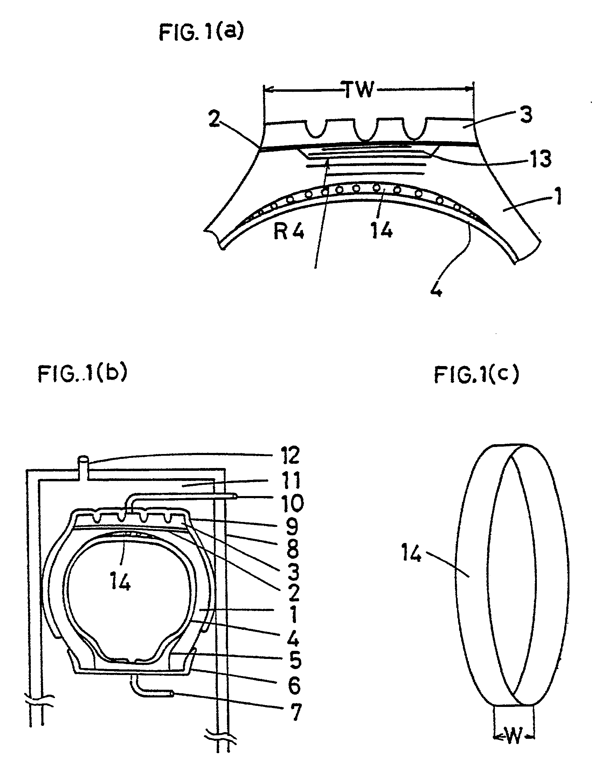

The tyre in Fig 1 comprises a carcass 1 which has had its tread and upper breaker layers removed to leave two breaker reinforcement plies. Two new breaker plies 13 are positioned centrally on the tyre carcass 1 and then an unvulcanized cushion rubber layer 2 is placed over the resultant breaker assembly. A prevulcanized tread 3 is positioned over the cushion rubber layer 2. Finally a protective ring 14 is disposed on the inside of the carcass 1 under the tread and breaker to complete the tyre assembly. Details of the protective ring 14 will be given later.

Then the outer periphery of the tyre is covered by a curing envelope 9 and a tube 4, flap 5 are assembled with the tyre onto a wheelrim 6. This assembly is then placed in a curing chamber 8 and the tube 4 is inflated to a pressure of 7 to 8 kg/cm$^2$ by means of its valve 7. At the same time hot air or steam is put into the interior 11 of the curing chamber 8 via the inlet 12 at a pressure of about 5kg/cm$^2$ and at a temperature of 100°C to 160°C

The heating medium strongly presses the envelope 9 and results in applying heat and pressure and accordingly, the cushion rubber 2 is vulcanized. As a result, the base tyre 1 and the tread rubber 3 are integrated together.

During this step the protective ring 14 restrains elongation of the tread in the circumferential direction and as a result the radius R4 of tread curvature is hardly changed so as to maintain the stable dimension.

Any trapped air in the base tyre 1, tread rubber 3 and envelope 9 is discharged into the atmosphere through a pipe 10. If need be, the air discharge may be assisted by a vacumn pump to improve the pressing and heating of the cushion rubber 2. The vulcanising time is normally about 5 hours at 100°C (or 1.5 hours at 160°C).

The protective ring 14 comprises at least one cord ply whose cords are embedded in rubber at an angle of less than 15 with respect to the circumferential direction of the tyre. The material of the cord ply may be an organic fibre such as Polyaramide, Nylon or Rayon, or an inorganic fibre such as steel. The width of the protective ring 14 is 50% to 120% more preferably 80% to 100% of the tread width. When more than one cord ply is used, the cords of each cord ply are laid parallel in each ply and crosswise with that of the adjacent ply.

Finally, the protective ring 14 is usually removed from the tyre after vulcanization and may be reused, but it may be adhered to the inner surface of the tyre and left in place.

To show the advantage of the process using the protective ring some tyres were tested to give results to show the tread radius against inflation pressure for tyres with and without the protective ring.

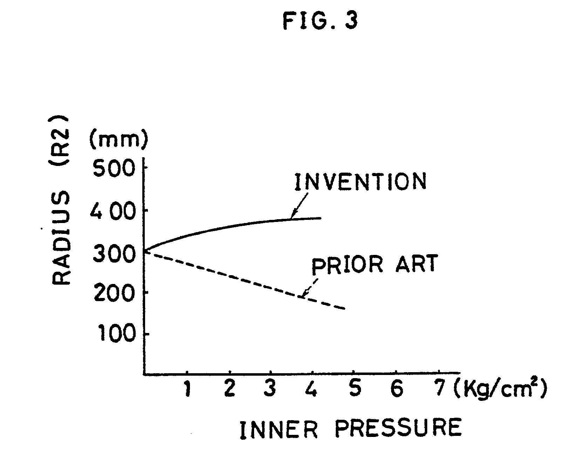

The tyres were carcasses tested before applications of any new breaker ply, and the results are shown in Fig.3. The tyres were of 10.00R20 in size and the specifications of the proptective ring are shown in Table 1.

**Table 1**

| Width (W) of protective ring / Tread width (TW) | 80% |
|---|---|
| Number of cord ply | 1 |
| Angle of cord | 0 |
| Material of cord | Steel cord 3/0.2 + 6/0.38 |
| Density of cords | 28 ends /5 cm |

As can be seen the protective ring disposed on the inner surface of the tyre restrained the elongation thereof due to the inner air pressure in vulcanizing process. Decrease in the radius of tread curvature which results from this elongation which is a drawback in the pre-cure procedure according to the prior art, is effectively prevented.

Furthermore, the present invention has a merit that the present plant and equipment can be used as they are. Then again the present invention can be effectively applied to retreading and rebreakering a worn tyre which has a breaker comprising high rigidity cords such as a radial tyre for heavy duty vehicles or light trucks.

**Claims**

1. A retreading process comprising the steps of applying a new breaker ply (3) to a tyre carcass (1) from which a damaged breaker ply has been removed, applying over the breaker ply (13) an unvulcanized cushion layer (2) and a vulcanized or semi vulcanized tread rubber (3) and heating, the assembly to vulcanise the assembly charcaterised by vulcanising and pressing with a protective ring (14), having at least one reinforcement ply therein whose cords are embedded in rubber and lie at an angle of not more than 15° to the circumferential direction of the tyre, positioned inside the tyre carcass (1) adjacent to the breaker to restrain elongation of the breaker in the circumferential direction due to the pressure.

2. A process according to claim 1 characterised in that the protective ring (14) is subsequently removed from the tyre.

3. A process according to claims 1 or 2 characterised in that the tyre assembly is vulcanised in a curing chamber (8) with the tyre encased in a curing envelope (9) and the interior of the cords envelope (9) is exhausted to atmospher to allow discharge of trapped air.

4. A process according to claim 3 characterised by connecting an air pump to the curing envelope (9) to remove trapped air.

**Patentansprüche**

1. Verfahren zur Laufflächenerneuerung, mit Anbringen einer neuen Gürtellage (13) an einer Reifenkarkasse (1), von der eine beschädigte Gürtellage entfernt worden war, Anbringen einer unvulkanisierten Polsterlage (2) und eines vulkanisierten oder halbvulkanisierten Laufflächengummis (3) über der Gürtellage (13) und Erhitzen der Anordnung, um die Anordnung zu vulkanisieren, dadurch gekennzeichnet, daß gepreßt und vulkanisiert wird mit einem Schutzring (14) mit mindestens einer Verstärkungslage, deren Korde in Gummi eingebettet sind und mit einem Winkel von nicht mehr als 15° zur Umfangsrichtung des Reifens liegen, wobei der Schutzring innerhalb der Reifenkarkasse (1) benachbart zum Gürtel positioniert ist, um eine Längung des Gürtels in Umfangsrichtung infolge des Druckes einzuschränken.

2. Verfahren nach Anspruch 1, dadurch gekennzeichnet, daß der Schutzring (14) daraufhin von dem Reifen entfernt wird.

3. Verfahren nach Anspruch 1 oder 2, dadurch gekennzeichnet, daß die Reifenanordnung in einer Vulkanisierkammer (8) vulkanisiert wird, wobei der Reifen in einem Vulkanisier-Umschlag (9) eingeschlossen ist und das Innere des Vulkanisier-Umschlags (9) an die Umgebung entlüftet wird, um ein Ablassen eingeschlossener Luft zuzulassen.

4. Verfahren nach Anspruch 3, gekennzeichnet durch Anschließen einer Luftpumpe an den Vulkanisier-Umschlag (9), um eingeschlossene Luft zu entfernen.

## Revendications

1. Procédé de rechapage comportant les étapes d'application d'une nouvelle nappe sommet (13) à une carcasse (1) de pneumatique dont une nappe sommet détériorée a été retirée, l'application sur la nappe sommet (13) d'une couche vulcanisée (2) d'amortissement et d'un caoutchouc vulcanisé ou semi-vulcanisé (3) de bande de roulement, et de chauffage de l'ensemble afin qu'il soit vulcanisé, caractérisé par la vulcanisation et la compression avec un anneau protecteur (14) ayant au moins une nappe d'armature dont les câblés sont enrobés dans du caoutchouc et qui fait un angle ne dépassant pas 15° avec la direction circonférentielle du pneumatique, l'anneau étant placé à l'intérieur de la carcasse (1) près de la nappe sommet afin qu'il limite l'allongement de la nappe sommet en direction circonférentielle au cours de la compression.

2. Procédé selon la revendication 1, caractérisé en ce que l'anneau protecteur (14) est ensuite retiré du pneumatique.

3. Procédé selon la revendication 1 ou 2, caractérisé en ce que l'ensemble du pneumatique est vulcanisé dans une chambre de vulcanisation (8) alors que le pneumatique est logé dans une enveloppe de vulcanisation (9), et l'intérieur de l'enveloppe (9) des câblés est évacué vers l'atmosphère afin que l'air piégé puisse être chassé.

4. Procédé selon la revendication 3, caractérisé par le raccordement d'une pompe pneumatique à l'enveloppe de vulcanisation (9) afin que l'air piégé soit chassé.

FIG. 1(a)

FIG..1(b)

FIG.1(c)

FIG.2(a)

B

A

R1

FIG.2(b)

B

D

C

R2

FIG.2(c)

F

E

C

R2′

FIG 2(d)

F

R3′

# FIG. 3